# EUROPEAN PATENT APPLICATION

(11) **EP 4 826 003 A1**
(43) Date of publication of application: **21.10.2026**
(21) Application number: 24904393.6
(22) Date of filing: 12.12.2024
(51) Int. Cl.: C22B 26/12, C22B 7/00, C22B 3/08, C22B 3/22

(54) **MANUFACTURING METHOD FOR WASTE SAGGER PEELING MATERIAL, WASTE SAGGER PEELING MATERIAL AND METHOD FOR RECOVERING LITHIUM BY USING SAME**

(30) Priority: 14.12.2023 KR 20230182331
(71) Applicant: POSCO Holdings Inc., Pohang-si, Gyeongsangbuk-do 37859 (KR)
(72) Inventor: Heo, Jungho, Pohang-si, Gyeongsangbuk-do 37859 (KR); Kim, Seung Goo, Pohang-si, Gyeongsangbuk-do 37859 (KR); Bae, Inkyung, Pohang-si, Gyeongsangbuk-do 37859 (KR)
(74) Representative: Pfenning, Meinig & Partner mbB
(86) International application number: PCT/KR2024/096806
(87) International publication number: WO 2025/127828

(57) **Abstract**

The present invention relates to a method for preparing an exfoliated material of a waste box sagger, comprising: separating, from a waste box sagger, a lithium-containing layer including an altered layer and an adhered layer; crushing the lithium-containing layer; and selecting the crushed lithium-containing layer powder, wherein the selecting of the lithium-containing layer powder comprises selecting powder having a D90 particle diameter of 100 µm or less, or selecting powder having a whiteness index of 83 or less.

## Description

### [TECHNICAL FIELD]

The present invention relates to a method for preparing an exfoliated material of a waste box sagger, an exfoliated material of a waste box sagger, and a method for recovering lithium using the same.

### [BACKGROUND ART]

A positive electrode active material for a secondary battery is prepared by mixing lithium hydroxide (LiOH·H₂O) with an NCM- or NCMA-based metal oxide, and then carrying out a calcination reaction at a high temperature of about 1,000°C. At this time, a reaction vessel containing the mixed material has the form of a ceramic box and is generally referred to as a box sagger.

Lithium hydroxide is used in a somewhat excessive amount in production of a positive electrode active material, and due to continuous/repeated high-temperature calcination reactions, physical resistance is degraded, and diffusion/erosion of lithium, which is a raw material of the positive electrode active material, occurs into the box sagger. Accordingly, there is a problem in that the lifespan of the box sagger is shortened, and periodic replacement of the box sagger is performed at intervals of about 30 to 60 days.

A waste box sagger inevitably generated after use is currently discarded due to the absence of recycling technology, and the amount of waste box saggers generated is also expected to rapidly increase due to the rapid demand for secondary batteries. Accordingly, there is a need to develop a method capable of recycling waste box saggers.

### [DETAILED DESCRIPTION OF THE INVENTION]

### [Technical Problem]

The present invention is intended to provide a method for preparing an exfoliated material of a waste box sagger, which can recycle a waste box sagger by utilizing a lithium-containing source of the waste box sagger.

In addition, the present invention is intended to provide an exfoliated material of a waste box sagger, which includes a lithium-containing source of a waste box sagger and can be used to recover lithium, particularly to recover lithium by replacing a portion of lithium ore.

In addition, the present invention is intended to provide a method for recovering lithium using the above-described exfoliated material of a waste box sagger.

### [Technical Solution]

The present invention provides a method for preparing an exfoliated material of a waste box sagger, comprising: separating, from a waste box sagger, a lithium-containing layer including an altered layer and an adhered layer; crushing the lithium-containing layer; and selecting the crushed lithium-containing layer powder, wherein the selecting of the lithium-containing layer powder comprises selecting powder having a D90 particle diameter of 100 µm or less, or selecting powder having a whiteness index of 83 or less.

In addition, the present invention provides an exfoliated material of a waste box sagger, comprising powder of an altered layer of a waste box sagger and an adhered layer of a waste box sagger, and having a D90 particle diameter of 100 µm or less.

In addition, the present invention provides an exfoliated material of a waste box sagger, comprising powder of an altered layer of a waste box sagger and an adhered layer of a waste box sagger, and having a whiteness index of 83 or less.

In addition, the present invention provides a method for recovering lithium, comprising: preparing an exfoliated material of a waste box sagger having a D90 particle diameter of 100 µm or less or a whiteness index of 83 or less; calcining the exfoliated material of the waste box sagger; sulfuric acid-roasting the calcined exfoliated material of the waste box sagger; leaching lithium from the roasted exfoliated material of the waste box sagger to obtain a leached slurry; and performing solid-liquid separation on the leached slurry, wherein the exfoliated material of the waste box sagger comprises powder of an altered layer of a waste box sagger and an adhered layer of a waste box sagger.

In addition, the present invention provides a method for recovering lithium, comprising: preparing an exfoliated material of a waste box sagger having a D90 particle diameter of 100 µm or less or a whiteness index of 83 or less; preparing lithium-containing ore; mixing the lithium-containing ore and the exfoliated material of the waste box sagger to obtain a mixture; calcining the mixture; sulfuric acid-roasting the calcined mixture; leaching lithium from the sulfuric acid-roasted mixture to obtain a leached slurry; and performing solid-liquid separation on the leached slurry, wherein the exfoliated material of the waste box sagger comprises powder of an altered layer of a waste box sagger and an adhered layer of a waste box sagger.

### [Advantageous Effects]

The method for preparing an exfoliated material of a waste box sagger according to the present invention has an excellent advantage from an environmental standpoint because a lithium-containing layer of a waste box sagger, which has conventionally been discarded, can be recovered.

In addition, since the exfoliated material of a waste box sagger according to the present invention contains lithium, lithium can be recovered therefrom. In addition, it can replace conventional spodumene concentrate, and thus has excellent advantages in terms of both cost and environment.

In addition, the method for recovering lithium according to the present invention can recover lithium using an exfoliated material of a waste box sagger recovered from a waste box sagger, and particularly can replace conventional spodumene concentrate, and thus has excellent advantages in terms of both cost and environment.

### [BRIEF DESCRIPTION OF THE DRAWINGS]

FIG. 1 is an image showing an apparent classification by layer of a waste box sagger.
FIG. 2 shows XRD analysis results of exfoliated materials of waste box saggers according to some embodiments of the present invention.
FIG. 3 shows particle size distributions of a crushed adhered layer, altered layer, and original layer according to some embodiments of the present invention.

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

In the present invention, when a member is referred to as being positioned "on" another member, this includes not only a case in which the member is in direct contact with the other member, but also a case in which another member is interposed between the two members.

In the present invention, when a part is referred to as "comprising" a certain component, this means that other components may be further included, rather than excluding other components, unless specifically stated to the contrary.

### <Method for Preparing Exfoliated Material of Waste Box Sagger>

One aspect of the present invention relates to a method for preparing an exfoliated material of a waste box sagger, comprising: separating, from a waste box sagger, a lithium-containing layer including an altered layer and an adhered layer; crushing the lithium-containing layer; and selecting the crushed lithium-containing layer powder, wherein the selecting of the lithium-containing layer powder comprises selecting powder having a D90 particle diameter of 100 µm or less, or selecting powder having a whiteness index of 83 or less.

In a process of preparing a positive electrode active material, an altered layer of a waste box sagger caused by surface erosion/reaction contains a large amount of lithium, which is a main raw material of the positive electrode active material. The altered layer mainly exists in the form of LiAlO₂ or Li₄SiO₄ due to a reaction between the box sagger and a lithium compound. Such an altered layer causes cracks on the surface of a crucible, thereby somewhat causing problems of reducing a recovery rate of the positive electrode active material after preparation of the positive electrode active material or degrading quality due to incorporation of components of the box sagger caused by the altered layer during preparation of the positive electrode active material. Accordingly, the box sagger must be periodically discarded.

However, since the discarded box sagger is a lithium-containing high-grade raw material containing a large amount of lithium, the present invention has devised a method in which, among conventionally discarded box saggers, only a lithium-containing layer is separated and lithium can be more effectively recovered therefrom, and which can be used as a substitute for a spodumene raw material in a lithium process using ore.

The method for preparing an exfoliated material of a waste box sagger according to the present invention includes separating, from a waste box sagger, a lithium-containing layer including an altered layer and an adhered layer.

In an embodiment of the present invention, the step of separating, from a waste box sagger, a lithium-containing layer including an altered layer and an adhered layer may be a step of separating the lithium-containing layer including the altered layer and the adhered layer from an original layer of the waste box sagger.

The step of separating the lithium-containing layer including the altered layer and the adhered layer from the original layer of the waste box sagger may be performed by applying physical force.

For example, any general equipment capable of selectively obtaining a target layer on the surface of a waste box sagger, such as a crusher or a shearing machine for roughly crushing the waste box sagger, a tapping machine for tapping, a high-speed surface grinder, or a polishing machine, may be used. After a crushed material is obtained, the lithium-containing layer including the altered layer and the adhered layer may be separated from the original layer of the waste box sagger.

In this case, when the waste box sagger is crushed, the size of the crushed material is not particularly limited. Specifically, the size is not particularly limited as long as it allows the lithium-containing layer including the altered layer and the adhered layer to be directly and easily separated from the original layer of the waste box sagger.

Since the altered layer and the original layer have somewhat different compositions of components contained therein, they can be easily separated when appropriate physical force is applied.

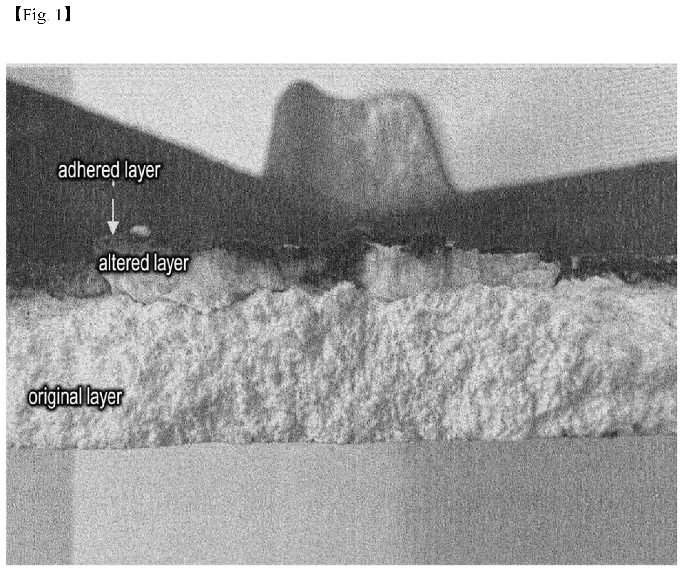

FIG. 1 is an image showing an apparent classification by layer of a waste box sagger. Specifically, the waste box sagger may be classified into an original layer, an altered layer altered by diffusion or penetration of a material such as lithium into the waste box sagger, and an adhered layer formed on the altered layer.

As can be confirmed from FIG. 1, the original layer, the altered layer, and the adhered layer can be visually confirmed. Specifically, the original layer may be classified as a layer into which lithium is not substantially introduced and which does not contain lithium, and the altered layer and the adhered layer may be classified as layers containing lithium.

The adhered layer means a residual layer remaining after securing a positive electrode active material containing lithium in a box sagger after calcination. The altered layer is generated by continuous diffusion of lithium into the box sagger and high-temperature chemical reaction due to repeated high-temperature calcination of the positive electrode active material contained in the box sagger. The diffused lithium reacts with raw materials of the box sagger and exists as LiAlO₂ or Li₄SiO₄, and exhibits physicochemical differences from the original layer and the adhered layer. Since diffusion of lithium depends on various factors such as time and temperature, the content (wt%) of lithium present in the altered layer is inevitably relatively smaller than that of lithium, which is a positive electrode active material source remaining in the adhered layer. However, since the thickness of the altered layer is relatively larger than that of the adhered layer, the total amount of lithium may depend on the absolute amounts of the altered layer and the adhered layer.

In short, in the present invention, the lithium-containing layer is a term collectively referring to the altered layer and the adhered layer that contain lithium.

In another embodiment of the present invention, the altered layer may include one or more selected from the group consisting of LiAlO₂ and Li₄SiO₄.

In another embodiment of the present invention, the adhered layer may include a transition metal compound containing lithium.

The method for preparing an exfoliated material of a waste box sagger according to the present invention includes crushing the lithium-containing layer.

The crushing may be performed using a pulverizer or a crusher.

The method for preparing an exfoliated material of a waste box sagger according to the present invention includes selecting the crushed lithium-containing layer powder.

In this case, the step of selecting the lithium-containing layer powder may be a step of selecting powder having a D90 particle diameter of 100 µm or less, or selecting powder having a whiteness index of 83 or less.

In the present invention, the "whiteness index" may be calculated from the following Equation 1 using Lab color coordinates. [Equation 1] $Whiteness Index \left[WI\right] = 100 - {\left[{\left(100-L*\right)}^{2}+{\left(a*\right)}^{2}+{\left(b*\right)}^{2}\right]}^{0.5}$

In short, the method for preparing an exfoliated material of a waste box sagger according to the present invention may include selecting lithium-containing layer powder having a D90 particle diameter of 100 µm or less.

Specifically, the crushed lithium-containing layer powder may contain some original layer powder mixed therein. Since incorporation of original layer powder that does not contain lithium is the same as incorporation of impurities, it is preferable to minimize incorporation of the original layer.

Since stable phases present in the original layer, the altered layer, and the adhered layer are different from one another, when they are crushed with the same crushing strength, degrees of pulverization become different.

Specifically, the original layer powder has a relatively large particle size compared to the lithium-containing layer powder.

Accordingly, in the present invention, incorporation of the original layer powder is minimized by selecting powder having a D90 particle diameter of 100 µm or less.

In this case, D90 may be defined as a particle diameter corresponding to 90% of the cumulative volume in a particle size distribution curve of particles. The D90 may be measured using, for example, a laser diffraction method.

The step of selecting the lithium-containing layer powder may be performed using a vibrating sieve or the like. For example, meshes having various particle size distributions may be used, and lithium-containing layer powder having a D90 of 100 µm or less may be selected by using an appropriate sieve of 200 mesh or more capable of selecting powder of 100 µm or less and applying vibration, but the present invention is not limited thereto.

Alternatively, the method for preparing an exfoliated material of a waste box sagger according to the present invention may include selecting powder having a whiteness index of 83 or less.

As can be confirmed from FIG. 1, the original layer, the altered layer, and the adhered layer can be easily visually distinguished.

Specifically, the altered layer and the adhered layer have a lower whiteness index than the original layer, and specifically, when powder having a whiteness index of 83 or less is selected, lithium-containing layer powder can be easily selected.

In another embodiment of the present invention, the altered layer may have a whiteness index of 83 or less.

In another embodiment of the present invention, the adhered layer may have a whiteness index of 50 or less.

The method for preparing an exfoliated material of a waste box sagger according to the present invention may include both the step of selecting powder having a whiteness index of 83 or less and the step of selecting powder having a D90 particle diameter of 100 µm or less.

For example, after powder having a whiteness index of 83 or less is selected, powder having a D90 particle diameter of 100 µm or less may be selected therefrom.

Since the method for preparing an exfoliated material of a waste box sagger according to the present invention appropriately separates the lithium-containing layer and prepares an exfoliated material of a waste box sagger therefrom, there is an advantage in that an exfoliated material of a waste box sagger having a lower impurity content and a higher lithium content than when the entire exfoliated material of a waste box sagger is used can be obtained.

### <Exfoliated Material of Waste Box Sagger>

Another aspect of the present invention relates to an exfoliated material of a waste box sagger, comprising powder of an altered layer of a waste box sagger and an adhered layer of a waste box sagger, and having a D90 particle diameter of 100 µm or less.

Specifically, another aspect of the present invention relates to an exfoliated material of a waste box sagger having a D90 particle diameter of 100 µm or less, which is prepared by a method for preparing an exfoliated material of a waste box sagger comprising: separating, from a waste box sagger, a lithium-containing layer including an altered layer and an adhered layer; crushing the lithium-containing layer; and selecting the crushed lithium-containing layer powder, wherein the selecting of the lithium-containing layer powder comprises selecting powder having a D90 particle diameter of 100 µm or less.

Another aspect of the present invention relates to an exfoliated material of a waste box sagger, comprising powder of an altered layer of a waste box sagger and an adhered layer of a waste box sagger, and having a whiteness index of 83 or less.

Specifically, another aspect of the present invention relates to an exfoliated material of a waste box sagger having a whiteness index of 83 or less, which is prepared by a method for preparing an exfoliated material of a waste box sagger comprising: separating, from a waste box sagger, a lithium-containing layer including an altered layer and an adhered layer; crushing the lithium-containing layer; and selecting the crushed lithium-containing layer powder, wherein the selecting of the lithium-containing layer powder comprises selecting powder having a whiteness index of 83 or less.

In short, the exfoliated material of a waste box sagger according to the present invention may have a D90 particle diameter of 100 µm or less and a whiteness index of 83 or less. Specifically, the exfoliated material of a waste box sagger according to the present invention has a D90 particle diameter of 100 µm or less and a whiteness index of 83 or less.

Since the exfoliated material of a waste box sagger according to the present invention includes powder of an altered layer of a waste box sagger and an adhered layer of a waste box sagger, it has an advantage of having a high lithium content, and thus can be usefully used to replace and reduce the amount of spodumene, which is a major lithium raw material in an ore lithium process.

In another embodiment of the present invention, the altered layer powder may include one or more selected from the group consisting of LiAlO₂ and Li₄SiO₄.

In another embodiment of the present invention, the adhered layer powder may include a transition metal compound containing lithium.

In short, the exfoliated material of a waste box sagger according to the present invention may include a lithium-containing compound.

In another embodiment of the present invention, the exfoliated material of a waste box sagger may have a D50 particle diameter of 35 µm or less.

The exfoliated material of a waste box sagger may have a D10 particle diameter of 3.5 µm or less.

In this case, D50 may be defined as a particle diameter corresponding to 50% of the cumulative volume in a particle size distribution curve of particles, and D10 may be defined as a particle diameter corresponding to 10% of the cumulative volume.

In another embodiment of the present invention, the altered layer may have a whiteness index of 83 or less.

In another embodiment of the present invention, the adhered layer may have a whiteness index of 50 or less.

### <Method for Recovering Lithium>

Another aspect of the present invention relates to a method for recovering lithium, comprising: preparing an exfoliated material of a waste box sagger having a D90 particle diameter of 100 µm or less or a whiteness index of 83 or less; calcining the exfoliated material of the waste box sagger; sulfuric acid-roasting the calcined exfoliated material of the waste box sagger; leaching lithium from the roasted exfoliated material of the waste box sagger to obtain a leached slurry; and performing solid-liquid separation on the leached slurry, wherein the exfoliated material of the waste box sagger comprises powder of an altered layer of a waste box sagger and an adhered layer of a waste box sagger.

In addition, another aspect of the present invention relates to a method for recovering lithium, comprising: preparing an exfoliated material of a waste box sagger having a D90 particle diameter of 100 µm or less or a whiteness index of 83 or less; preparing lithium-containing ore; mixing the lithium-containing ore and the exfoliated material of the waste box sagger to obtain a mixture; calcining the mixture; sulfuric acid-roasting the calcined mixture; leaching lithium from the sulfuric acid-roasted mixture to obtain a leached slurry; and performing solid-liquid separation on the leached slurry, wherein the exfoliated material of the waste box sagger comprises powder of an altered layer of a waste box sagger and an adhered layer of a waste box sagger.

Since the method for recovering lithium according to the present invention uses the above-described exfoliated material of a waste box sagger, specifically an exfoliated material of a waste box sagger prepared by the above-described method for preparing an exfoliated material of a waste box sagger, there are advantages in that a waste box sagger can be recycled, which is preferable in terms of economy and environment, and lithium can be efficiently recovered.

In short, the method for recovering lithium according to the present invention may recover lithium from the above-described exfoliated material of a waste box sagger, or may recover lithium therefrom after mixing the above-described exfoliated material of a waste box sagger with lithium-containing ore.

The contents described above may be applied to the exfoliated material of a waste box sagger.

The above-described method for preparing an exfoliated material of a waste box sagger may be applied to the step of preparing the exfoliated material of a waste box sagger.

In another embodiment of the present invention, the lithium-containing ore may include one or more selected from the group consisting of spodumene, petalite, lepidolite, hectorite, eucryptite, jadarite, zinnwaldite, and amblygonite.

In another embodiment of the present invention, the lithium-containing ore may be spodumene.

By mixing the spodumene with the exfoliated material of a waste box sagger having a high lithium content, there is an advantage in that costs can be reduced while securing an excellent lithium leaching rate.

The step of mixing the lithium-containing ore and the exfoliated material of the waste box sagger to obtain the mixture may be obtained by mixing the exfoliated material of the waste box sagger and the lithium-containing ore using a kneader, but is not limited thereto.

The step of preparing the lithium-containing ore may include crushing the lithium-containing ore.

Specifically, the lithium-containing ore may be crushed using a crusher such that an average particle diameter of the ore is 150 µm or less, preferably 100 µm or less, and more preferably 50 µm to 100 µm, but the present invention is not limited thereto.

When the lithium-containing ore is crushed such that the average particle diameter thereof satisfies the above range, kneading with the exfoliated material of the waste box sagger is easy, and this may be more preferable in a calcination process and a sulfuric acid roasting process to be described below.

In another embodiment of the present invention, in the step of obtaining the mixture, the exfoliated material of the waste box sagger may be mixed in an amount of 5 wt% or less based on the weight of the lithium-containing ore.

In another embodiment of the present invention, in the step of obtaining the mixture, the exfoliated material of the waste box sagger may be mixed in an amount of 1.4 wt% to 5 wt% based on the weight of the lithium-containing ore.

When the exfoliated material of the waste box sagger is mixed within the above range, impurities can be easily removed in a purification process, which is preferable.

The step of calcining the exfoliated material of the waste box sagger or the mixture of the exfoliated material of the waste box sagger and the lithium-containing ore is performed.

In the step of calcining the exfoliated material of the waste box sagger, the calcination time may be 5 minutes to 5 hours, preferably 10 minutes to 3 hours.

When the calcination time satisfies the above range, phase transition of the lithium-containing ore from an α phase to a β phase is sufficient, and a phenomenon in which lithium leaching rate is reduced due to under-calcination or over-calcination can be suppressed, which is preferable.

Thereafter, the step of sulfuric acid-roasting the calcined exfoliated material of the waste box sagger or mixture is included.

By sulfuric acid-roasting the calcined exfoliated material of the waste box sagger or mixture, lithium in the exfoliated material of the waste box sagger and the lithium-containing ore can be transformed into a water-soluble material.

The sulfuric acid roasting may be performed at a temperature range of 175°C to 250°C, preferably 200°C to 250°C, for 30 minutes to 2 hours, preferably 30 minutes to 1 hour.

When the sulfuric acid roasting is performed within the above time range at the above temperature range, roasting time and energy consumption can be minimized, which is preferable.

Lithium is leached from the sulfuric acid-roasted exfoliated material of the waste box sagger or mixture to obtain a leached slurry.

Specifically, the leached slurry may be obtained by mixing the sulfuric acid-roasted exfoliated material of the waste box sagger or mixture with a solvent and performing water leaching.

The solvent may be pure water or distilled water, but is not limited thereto.

The solvent preferably does not contain an acidic material such as sulfuric acid, but is also not limited thereto. When the solvent does not contain an acidic material such as sulfuric acid, it is preferable because it is environmentally friendly. In addition, even if the solvent contains a small amount of an acid material in a complicated process, if it can be recycled within a range that does not cause problems in the entire production process, it may be economically and environmentally preferable.

In the step of obtaining the leached slurry, an additive may be further added to prepare a slurry, but the present invention is not limited thereto.

The additive may be, for example, one or more selected from an alkali metal compound or an alkaline earth metal compound, and specifically may be one or more selected from an alkali metal oxide, an alkali metal hydroxide, an alkali metal salt, an alkaline earth metal oxide, an alkaline earth metal hydroxide, or an alkaline earth metal salt. More specifically, the additive may be one or more selected from NaOH, Na₂CO₃, NaHCO₃, NaCl, Na₂SO₄, KOH, K₂CO₃, KHCO₃, KCl, K₂SO₄, Ca(OH)₂, CaO, Ca(NO₃)₂, CaSO₄, Mg(OH)₂, MgO, Mg(NO₃)₂, MgSO₄, and CaCO₃.

The additive may be mixed in an amount of 10 wt% to 60 wt%, and specifically 30 wt% to 60 wt%, based on the weight of the roasted exfoliated material of the waste box sagger or mixture, but is not limited thereto.

When the additive is mixed within the above range, lithium can be efficiently recovered while minimizing generation of subsequent contaminants, which is preferable.

In addition to the additive, an auxiliary additive may be further mixed, but the present invention is not limited thereto.

The auxiliary additive may be, for example, a compound containing one or more metal elements selected from Al and Ca.

Specifically, the auxiliary additive may be one or more selected from Al(OH)₃, Al(NO₃)₃, Al₂(SO₄)₃, AlCl₃, Ca(OH)₂, Ca(NO₃)₂, CaSO₄ and hydrates thereof, and CaCl₂, but is also not limited thereto.

The auxiliary additive may be mixed in an amount of 5 wt% to 40 wt% based on the weight of the roasted ore, but is not limited thereto.

The solvent may be introduced in an amount of 1 to 4 times, preferably 1.5 to 3 times, and more preferably 2 to 3 times, based on the weight of the roasted exfoliated material of the waste box sagger or mixture.

When the solvent is introduced to satisfy the above content, process costs can be reduced because lithium leaching efficiency is excellent while the content of the solvent is minimized, which is preferable.

The lithium leaching time may be 30 minutes to 5 hours, preferably 30 minutes to 4 hours, and more preferably 1 hour to 3 hours.

When the lithium leaching time satisfies the above range, lithium leaching efficiency is excellent while energy consumption can be reduced, which is preferable.

In this case, the lithium leaching may be performed at room temperature, and may be performed while stirring at 50 rpm to 500 rpm, preferably 100 rpm to 400 rpm, and more preferably 200 rpm to 300 rpm.

When the lithium leaching is performed while stirring at the above stirring speed, lithium leaching efficiency can be maximized while lithium leaching time is minimized, which is preferable.

The leached slurry may include lithium and one or more impurities selected from the group consisting of Al, Si, Fe, Mg, Ca, Na, K, Ni, Co, and Mn.

In short, the leached slurry may include lithium derived from the exfoliated material of the waste box sagger and a portion of raw materials of the positive electrode active material.

Thereafter, the step of performing solid-liquid separation on the leached slurry is included.

The step of performing solid-liquid separation on the leached slurry may be a step of separating the leached slurry into a leaching residue and leachate in which lithium is dissolved.

By performing solid-liquid separation on the leached slurry, the leached slurry can be separated into a solid leaching residue including impurities such as Al and Si, and leachate in which lithium and Mg, Ca, Fe, Co, Mn, Ni, Na, K, and the like are dissolved.

The solid-liquid separation method is not limited in the present invention.

For example, the solid-liquid separation may be performed using a microfilter, but is not limited thereto, and may be performed by a conventional method performed in the art.

The method for recovering lithium from ore according to the present invention may further include purifying the leachate.

The purification may be performed two or more times, but is not limited thereto. Specifically, the purifying step may include a first purifying step and a second purifying step.

The purification may be performed by a method generally performed in the art using a purification auxiliary raw material, and the present invention does not limit the purification method.

The method for recovering lithium according to the present invention may further include concentrating the leachate, but is not limited thereto.

Hereinafter, preferred Examples and Comparative Examples of the present invention will be described. However, the following Examples are merely preferred embodiments of the present invention, and the present invention is not limited to the following Examples.

### Analysis of Components of Spodumene and Waste Box Sagger

Spodumene was used as the lithium-containing ore, and an N65-based waste box sagger (in which the Ni content among NCM-based positive electrode active materials is 65%) was used as the waste box sagger.

In this case, since phases and compositions of the waste box sagger are different for each layer, differences between the layers were identified through basic chemical analysis. FIG. 1 shows apparent classification of each layer of the waste box sagger. Based on the apparent evaluation of FIG. 1, the layers of the waste box sagger were classified and named as an adhered layer, an altered layer, and an original layer.

Contents (wt%) of components in the raw materials used for each layer were analyzed by ICP-OES and are shown in Table 1 below. It can be confirmed that all layers except for the original layer of the waste box sagger contain lithium in the raw material. Furthermore, it is noteworthy that the lithium content is higher than that of spodumene ore.

**[Table 1]**

| Raw material | Classification | Li | Al | Si | Mg | Ca | Fe | Co | Mn | Ni | Na | K |
|---|---|---|---|---|---|---|---|---|---|---|---|---|
| Spodumene | - | 2.49 | 12.3 | 29.5 | 0.67 | 0.78 | 1.22 | - | - | - | 0.65 | 1.05 |
| Waste Box Sagger | Adhered Layer | 6.79 | 1.05 | 0.06 | 0.55 | - | 0.02 | 8.23 | 9.94 | 35.5 | - | - |
| | Altered Layer | 3.00 | 22.9 | 8.15 | 3.94 | - | 0.20 | 0.09 | 0.07 | 0.22 | - | - |
| | Original Layer | - | 34.6 | 10.6 | 7.31 | - | 0.33 | 0.09 | 0.01 | 0.004 | - | - |

Referring to FIG. 1, it can be seen that, in the case of the adhered layer, the lithium content is relatively high, and impurities such as Co, Mn, and Ni are also high at a level close to 8 wt% to 35 wt%. However, since the layer is very thin, its absolute amount is presumed to be very small. In contrast, the altered layer has a relatively low lithium content compared to the adhered layer, but has low contents of positive electrode active material impurities such as Fe, Co, Ni, and Mn, except for Mg. Accordingly, the altered layer is expected to be important as a lithium-containing source of the waste box sagger, and the influence of impurities of the positive electrode active material is expected to be somewhat small. However, due to the high Mg content (3.94 wt%) of the altered layer, the Mg content (g/L) in leachate is expected to be somewhat high.

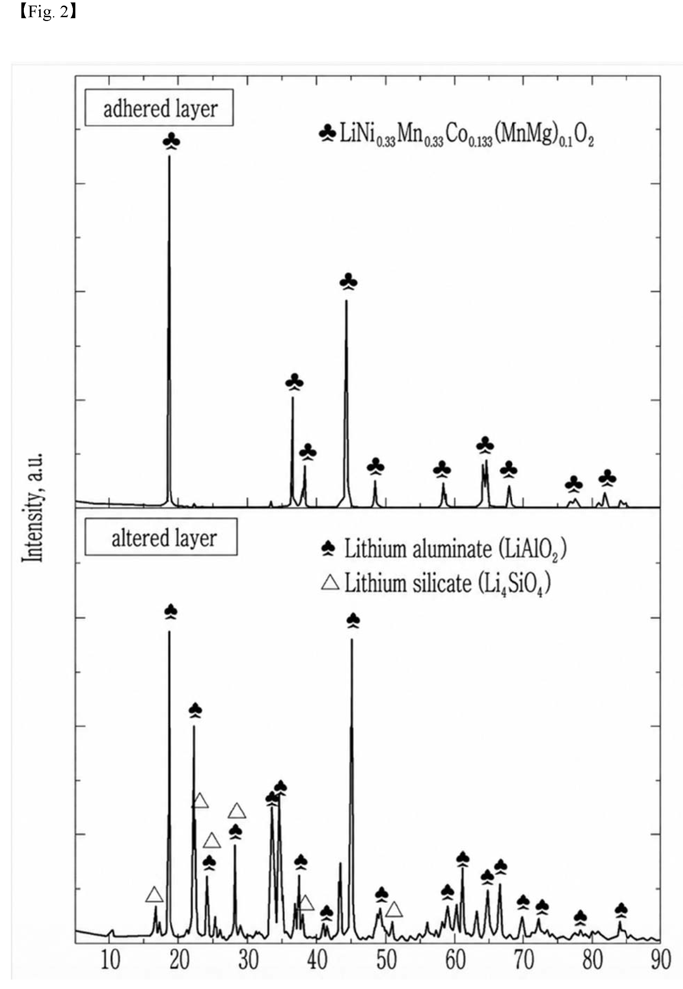

Stable phases of the exfoliated material of the waste box sagger (adhered layer and altered layer) were identified through XRD analysis, and are shown in FIG. 2.

Referring to FIG. 2, in the case of the adhered layer, a positive electrode material mixture (LiNi₀.₃₃Mn₀.₃₃Co₀.₁₃₃[Mn,Mg]₀.₁O₂) was confirmed, and in the case of the altered layer, two types of stable phases, LiAlO₂ and Li₄SiO₄, were confirmed. It can be clearly confirmed that all of them are lithium-containing phases.

### Color and Particle Size Analysis of Waste Box Sagger

The spodumene concentrate used was fine powder having an average particle size of about 75 µm. In the case of the waste box sagger, the adhered layer, altered layer, and original layer were physically separated based on the apparent boundary thereof. The separated layers were crushed using a pulverizer to obtain fine powder.

Color analysis coefficient values for each layer were obtained through color analysis of the separated powder of each layer. Color analysis was performed using a MINOLTA Spectrophotometer (model CM-3500d). Before measuring a sample, reference dark and reference white of a cylinder were measured. The sample was analyzed based on the reference values of the reference material, and values such as L* (Lightness), a* (Greenness to redness spectrum), and b* (Blueness to yellowness spectrum) were obtained. Among the obtained coefficients, since the L* value is a main brightness indicator of color, classification of each layer was primarily evaluated through the L* value. In addition, the L*, a*, and b* values were converted into a whiteness index (WI) using Equation 1 below, and the results are shown in Table 2 below. [Equation 1] $\left[WI\right] = 100 - {\left[{\left(100-L*\right)}^{2}+{\left(a*\right)}^{2}+{\left(b*\right)}^{2}\right]}^{0.5}$

**[Table 2]**

| Classification | L^{*} | a^{*} | b^{*} | c^{*} | h^{*} | Whiteness Index (WI) |
|---|---|---|---|---|---|---|
| Reference | 96.82 | -0.16 | -0.25 | 0.30 | 236.71 | 96.81 |
| Adhered Layer | 42.74 | 0.35 | 3.06 | 3.08 | 83.42 | 42.66 |
| Altered Layer | 82.86 | -0.2 | 5.15 | 5.15 | 92.20 | 82.10 |
| Original Layer | 84.94 | -0.47 | 5.41 | 5.43 | 94.98 | 83.99 |

A higher L* value means closer to white, and a lower L* value means closer to black. According to color analysis, it can be seen that the adhered layer and the altered layer to be used have significantly lower L* values than the original layer. In addition, it can be seen from the WI value that fine powder having a WI of about 83 or less is a layer containing lithium. That is, a value lower than the L* value (about 84) or WI value (about 83) of the original layer can be determined as a layer containing lithium effectively.

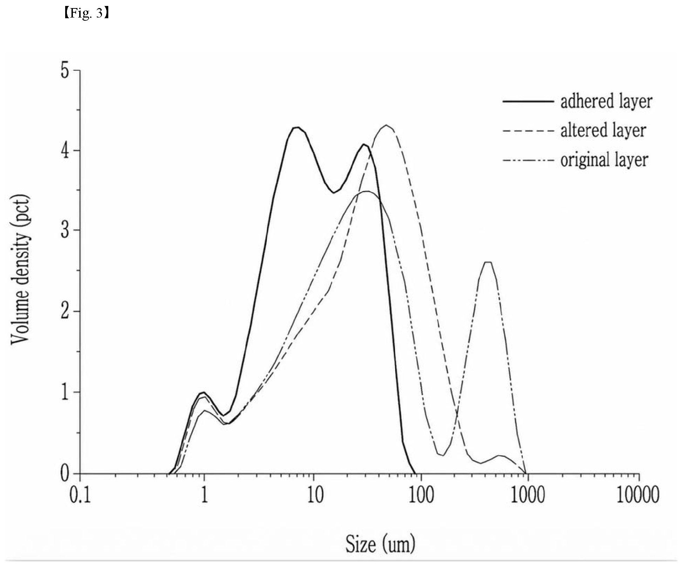

In addition, the distribution degree of particle size for each layer was evaluated through particle size analysis. Particle size analysis was performed using a Malvern Mastersizer 3000. After being appropriately mixed with water, the sample was introduced in the form of a slurry and analyzed values were obtained. The results are shown in FIG. 3, and D10, D50, and D90 of volume density (%) by major particle sizes are shown in Table 3.

**[Table 3]**

| Classification | Particle Diameter (µm) | | |
|---|---|---|---|
| | D10 | D50 | D90 |
| Adhered Layer | 2.31 | 10.1 | 39.4 |
| Altered Layer | 2.99 | 32.8 | 125 |
| Original Layer | 3.33 | 28.7 | 440 |

From the results of FIG. 3 and Table 3, it can be seen that the original layer is in the form of a fine powder raw material having a relatively high particle size compared to the adhered layer and the altered layer.

### Examples

The obtained exfoliated material of the waste box sagger (adhered layer + altered layer) and spodumene raw material were uniformly mixed according to predetermined mixing conditions. Thereafter, based on an ore lithium process, unit processes of calcination, sulfuric acid roasting, water leaching, and solid-liquid separation were performed on the homogeneously mixed samples for lithium extraction. In detail, the mixed samples were calcined using a box furnace, a temperature increase rate of 5 K/min was applied, the temperature was maintained at 1,000°C for 1 hour, and then furnace cooling was performed to obtain samples. The obtained samples were homogeneously mixed with sulfuric acid having a purity of 98%, and mixed at a mass ratio of 30% based on the amount of the calcined mixed sample. Homogenization was performed by mixing 200 times or more using a glass rod. The mixed samples were roasted using a box furnace. The temperature was raised at a rate of 5 K/min, maintained at a temperature of 250°C for 1 hour, and then furnace-cooled to obtain samples. Based on the mass of the obtained samples, two times the amount of water was used, and water leaching was performed using deionized water (DI water). Leaching was performed at room temperature for 1 hour, and continuous stirring was performed at 250 rpm using a magnetic bar during leaching. Thereafter, the leached slurry was subjected to solid-liquid separation using a microfilter to obtain leachate and a leaching residue.

### Experimental Example

With respect to Examples under three conditions in which, based on mixed samples of spodumene ore and the exfoliated material of the waste box sagger, 0 wt%, 1.4 wt%, and 5 wt% of the spodumene in the entire sample was replaced with the exfoliated material of the waste box sagger, major components (g/L) in the final extracted lithium-containing leachate were obtained through ICP-OES analysis, and the results are shown in Table 4 below.

**[Table 4]**

| Condition (Replacement Rate with Exfoliated Material of Waste Box Sagger) | Li | Al | Si | Mg | Ca | Fe | Co | Mn | Ni | Na | K | S |
|---|---|---|---|---|---|---|---|---|---|---|---|---|
| 0% Exfoliated Material of Waste Box Sagger | 10.14 | 1.48 | 0.13 | 0.10 | 0.51 | 0.83 | - | - | - | 1.10 | 0.40 | 30.6 |
| 1.4% Exfoliated Material of Waste Box Sagger | 10.50 | 0.98 | 0.08 | 0.10 | 0.58 | 0.37 | - | 0.09 | 0.003 | 0.93 | 0.33 | 30.9 |
| 5% Exfoliated Material of Waste Box Sagger | 11.54 | 1.70 | 0.05 | 0.28 | 0.58 | 0.33 | 0.004 | 0.1 | 0.02 | 0.77 | 0.23 | 31.6 |

Referring to Table 4, it was confirmed that the content of lithium (Li) in the leachate increased from 10.14 g/L to 11.54 g/L according to the replacement rate with the exfoliated material of the waste box sagger. Subsequently, among positive electrode materials, Ni increased from 0 g/L to 0.02 g/L, Mn increased from 0 g/L to 0.1 g/L, and Co increased from 0 g/L to 0.004 g/L, whereas Fe decreased from 0.83 g/L to 0.33 g/L.

It is expected that Al and Si, which are impurities in the ore lithium process, can be preferably removed in the first purification through pH adjustment even when the exfoliated material of the waste box sagger is increased up to 5 wt%. However, when the Mg content in the leachate becomes somewhat high, preferable removal in the second purification may be difficult. In the case of the leachate prepared by the method for recovering lithium according to the present invention, Mg increased from 0.1 g/L to 0.28 g/L, but it is expected that even the Mg content of 0.28 g/L at a 5 wt% replacement rate with the exfoliated material of the waste box sagger is at a level that can be sufficiently removed. In the case of Ca, it increased from 0.51 g/L to 0.58 g/L, but this is not considered a noticeable increase.

In addition, in the case of the contents of Na and K affecting the crystallization process, it was confirmed that they decreased from 1.10 g/L to 0.77 g/L and from 0.40 g/L to 0.23 g/L, respectively. It is expected that Na and K to be removed in order to produce battery-grade lithium hydroxide will also decrease.

Through the Experimental Example, it was found that, when the exfoliated material of the waste box sagger is used as a lithium-containing raw material replacing spodumene concentrate, lithium can be recovered and specific impurity contents can be reduced.

In addition, an appropriate replacement content range for use of the exfoliated material of the waste box sagger was secured, and an appropriate utilization methodology required for securing an effective lithium-containing source in the waste box sagger could be secured.

The present invention is not limited to the above Examples, and may be prepared in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A method for preparing an exfoliated material of a waste box sagger, comprising:
separating, from a waste box sagger, a lithium-containing layer including an altered layer and an adhered layer;
crushing the lithium-containing layer; and
selecting the crushed lithium-containing layer powder,
wherein the selecting of the lithium-containing layer powder comprises:
selecting powder having a D90 particle diameter of 100 µm or less, or
selecting powder having a whiteness index of 83 or less.

2. The method for preparing an exfoliated material of a waste box sagger of claim 1,
wherein the separating, from the waste box sagger, of the lithium-containing layer including the altered layer and the adhered layer is separating the lithium-containing layer including the altered layer and the adhered layer from an original layer of the waste box sagger.

3. The method for preparing an exfoliated material of a waste box sagger of claim 1,
wherein the altered layer comprises one or more selected from the group consisting of LiAlO₂ and Li₄SiO₄.

4. The method for preparing an exfoliated material of a waste box sagger of claim 1,
wherein the adhered layer comprises a transition metal compound containing lithium.

5. The method for preparing an exfoliated material of a waste box sagger of claim 1,
wherein the altered layer has a whiteness index of 83 or less.

6. The method for preparing an exfoliated material of a waste box sagger of claim 1,
wherein the adhered layer has a whiteness index of 50 or less.

7. An exfoliated material of a waste box sagger, comprising:
powder of an altered layer of a waste box sagger and an adhered layer of a waste box sagger,
wherein the exfoliated material has a D90 particle diameter of 100 µm or less.

8. The exfoliated material of a waste box sagger of claim 7,
wherein the altered layer powder comprises one or more selected from the group consisting of LiAlO₂ and Li₄SiO₄.

9. The exfoliated material of a waste box sagger of claim 7,
wherein the adhered layer powder comprises a transition metal compound containing lithium.

10. The exfoliated material of a waste box sagger of claim 7,
wherein the exfoliated material has a D50 particle diameter of 35 µm or less.

11. An exfoliated material of a waste box sagger, comprising:
powder of an altered layer of a waste box sagger and an adhered layer of a waste box sagger,
wherein the exfoliated material has a whiteness index of 83 or less.

12. The exfoliated material of a waste box sagger of claim 11,
wherein the altered layer powder comprises one or more selected from the group consisting of LiAlO₂ and Li₄SiO₄.

13. The exfoliated material of a waste box sagger of claim 11,
wherein the adhered layer powder comprises a transition metal compound containing lithium.

14. The exfoliated material of a waste box sagger of claim 11,
wherein the altered layer has a whiteness index of 83 or less.

15. The exfoliated material of a waste box sagger of claim 11,
wherein the adhered layer has a whiteness index of 50 or less.

16. A method for recovering lithium, comprising:
preparing an exfoliated material of a waste box sagger having a D90 particle diameter of 100 µm or less or a whiteness index of 83 or less;
calcining the exfoliated material of the waste box sagger;
sulfuric acid-roasting the calcined exfoliated material of the waste box sagger;
leaching lithium from the roasted exfoliated material of the waste box sagger to obtain a leached slurry; and
performing solid-liquid separation on the leached slurry,
wherein the exfoliated material of the waste box sagger comprises powder of an altered layer of a waste box sagger and an adhered layer of a waste box sagger.

17. A method for recovering lithium, comprising:
preparing an exfoliated material of a waste box sagger having a D90 particle diameter of 100 µm or less or a whiteness index of 83 or less;
preparing lithium-containing ore;
mixing the lithium-containing ore and the exfoliated material of the waste box sagger to obtain a mixture;
calcining the mixture;
sulfuric acid-roasting the calcined mixture;
leaching lithium from the sulfuric acid-roasted mixture to obtain a leached slurry; and
performing solid-liquid separation on the leached slurry,
wherein the exfoliated material of the waste box sagger comprises powder of an altered layer of a waste box sagger and an adhered layer of a waste box sagger.

18. The method for recovering lithium of claim 17,
wherein, in the mixing to obtain the mixture, the exfoliated material of the waste box sagger is mixed in an amount of 5 wt% or less based on the weight of the lithium-containing ore.

19. The method for recovering lithium of claim 18,
wherein, in the mixing to obtain the mixture, the exfoliated material of the waste box sagger is mixed in an amount of 1.4 wt% to 5 wt% based on the weight of the lithium-containing ore.

20. The method for recovering lithium of claim 17,
wherein the lithium-containing ore comprises one or more selected from the group consisting of spodumene, petalite, lepidolite, hectorite, eucryptite, jadarite, zinnwaldite, and amblygonite.

21. The method for recovering lithium of claim 20,
wherein the lithium-containing ore is spodumene.
